# EUROPEAN PATENT APPLICATION

(11) **EP 2 534 964 A1**
(43) Date of publication of application: **19.12.2012**
(21) Application number: 11742101.6
(22) Date of filing: 24.01.2011
(51) Int. Cl.: A23L 1/318, A23L 1/30, A23L 1/325, C12N 9/50, C12N 9/98

(54) **ENZYMATIC TREATMENT SOLUTION, SOFTENING METHOD, AND SOFTENED ANIMAL-BASED FOOD PRODUCT**

(30) Priority: 12.02.2010 JP 2010029444
(71) Applicant: En Otsuka Pharmaceutical Co., Ltd., Hanamaki-shi, Iwate 025-0312 (JP)
(72) Inventor: TAKEI Ryo, Hanamaki-shi Iwate 025-0312 (JP)
(74) Representative: Cabinet Plasseraud
(86) International application number: PCT/JP2011/051233
(87) International publication number: WO 2011/099354

(57) **Abstract**

An enzyme treatment solution of the present invention is adapted to be used in a softening method for softening an animal-based food material composed of meat or fish and shellfish by subjecting it to an enzyme treatment using the enzyme treatment solution. pH of the enzyme treatment solution is 8.0 or higher but lower than 10.5, and a salimeter measurement value obtained by measuring an electrolyte concentration of the enzyme treatment solution using a salimeter as a salt concentration is 0.7% or more but less than 3.0%. This makes it possible to reliably soften the animal-based food material while maintaining mouthfeel and flavor thereof, thereby obtaining a softened animal-based food material having smooth mouthfeel.

## Description

### TECHNICAL FIELD

The present invention relates to an enzyme treatment solution, a softening method and a softened animal-based food material.

### RELATED ART

For example, there exist a large number of old persons or patients incapable of chewing or swallowing tough foods (that is, persons having difficulty in swallowing/chewing) due to some diseases. These persons are generally ingesting a mixture obtained by mixing a plurality of foods, and then being mashed into a paste state or a liquid state.

However, in such a case, the persons cannot recognize what kinds of foods (food materials) they are eating, and thus cannot have much appetite. This tends to cause problems such as decline in physical strength of the persons. For this reason, from the viewpoint of improving the appetite, it is important that the food materials for such persons not only have softness, but also maintain inherent shapes thereof.

As a softening method for softening an animal-based food material which satisfies both of the above conditions, for example, the Patent document 1 discloses a softening method for softening an animal-based food material in a state that a shape thereof is maintained using a proteolytic enzyme.

However, the use of the softening method described in the Patent document 1 can maintain an inherent shape of the animal-based food material to some degree. However, the animal-based food material has poor mouthfeel and flavor, and thus it is difficult to say that the animal-based food material can be deliciously eaten.

### PRIOR ART DOCUMENT

### PATENT DOCUMENT

Patent Document 1: JP-A 2008-125437.

### SUMMARY OF THE INVENTION

### PROBLEM TO BE SOLVED BY THE INVENTION

It is an object of the present invention to provide an enzyme treatment solution adapted to be used in a softening method capable of reliably softening an animal-based food material while maintaining mouthfeel and flavor thereof, a softening method for softening an animal-based food material using such an enzyme treatment solution, and a softened animal-based food material obtained by softening an animal-based food material using such a softening method with the enzyme treatment solution while maintaining mouthfeel and flavor thereof.

In order to achieve such an object, the present invention includes the following features (1) to (12).

(1) An enzyme treatment solution adapted to be used in a softening method for softening an animal-based food material composed of meat or fish and shellfish by subjecting it to an enzyme treatment using the enzyme treatment solution,
wherein pH of the enzyme treatment solution is 8.0 or higher but lower than 10.5, and a salimeter measurement value obtained by measuring an electrolyte concentration of the enzyme treatment solution using a salimeter as a salt concentration is 0.7% or more but less than 3.0%.

(2) The enzyme treatment solution according to the feature (1), wherein the enzyme treatment solution contains a proteolytic enzyme having an activity within an alkaline region.

(3) The enzyme treatment solution according to the feature (2), wherein an amount of the proteolytic enzyme contained in the enzyme treatment solution is in the range of 5 • 0 × 10⁻⁴ to 3 • 0 wt%.

(4) The enzyme treatment solution according to any one of the features (1) to (3), wherein the enzyme treatment solution further contains a thickening agent.

(5) The enzyme treatment solution according to any one of the features (1) to (4), wherein the salimeter measurement value is obtained by measuring electrical conductivity of the enzyme treatment solution.

(6) A softening method for softening an animal-based food material by subjecting it to an enzyme treatment using the enzyme treatment solution according to any one of the features (1) to (5).

(7) The softening method according to the feature (6), wherein the enzyme treatment is carried out by applying the enzyme treatment solution to the animal-based food material, and then reacting a proteolytic enzyme contained in the enzyme treatment solution and having an activity within an alkaline region with components of the animal-based food material.

(8) The softening method according to the feature (6) or (7), wherein after the enzyme treatment, an enzyme deactivation treatment, in which the enzyme is deactivated by heating the animal-based food material, is carried out.

(9) A softened animal-based food material obtained by softening an animal-based food material using the softening method according to any one of the features (6) to (8).

(10) The softened animal-based food material according to the feature (9), wherein in the case where the softened animal-based food material is subjected to a dry treatment, it can be restored using water or boiling water.

(11) The softened animal-based food material according to the feature (10), wherein the water or the boiling water to be used for restoring the softened animal-based food material subjected to the dry treatment is an aqueous solution or an aqueous suspension containing at least one of a contrast medium and a food additive.

(12) The softened animal-based food material according to any one of the features (9) to (11), wherein compressive stress of the softened animal-based food material, which is measured according to a "test method for a food material suitable for patients with disturbance of swallowing" described in "Notice on a labeling approval of foods for special dietary uses and the like (Notice No. 0212001 of the Department of Food Safety, the Pharmaceutical and Food Safety Bureau of the Ministry of Health, Labour and Welfare of Japan, February 12, 2009", is 1 × 10⁵ N/m² or less.

### MODE FOR CARRYING OUT THE INVENTION

Hereinafter, description will be made on an enzyme treatment solution, a softening method and a softened animal-based food material of the present invention in detail based on a preferred embodiment.

A softening method of the present invention is a method for softening an animal-based food material composed of meat or fish and shellfish by subjecting it to an enzyme treatment using an enzyme treatment solution of the present invention. Such an enzyme treatment solution is characterized in that pH thereof is 8.0 or higher but lower than 10.5, and a salimeter (salt concentration meter) measurement value obtained by measuring an electrolyte concentration of the enzyme treatment solution using a salimeter as a salt concentration (saline concentration) is 0.7% or more but less than 3.0%.

Here, the animal-based food material to be treated in the present invention is composed of the meat or the fish and shellfish. Among them, examples of the meat include, but are not especially limited to, meats such as a beef, a pork, a horse, a mutton, a chicken, a duck and a turkey, games such as a wild boar, a venison and a bear, marine animal meats such as a whale and a dolphin, dressed meats such as a wild duck, an ostrich, a kangaroo and a crocodile, and processed products thereof.
On the other hand, examples of the fish and shellfish include, but are not especially limited to, raw meats of fishes such as a tuna, a marlin, a salmon, a horse mackerel, a mackerel and a Matsubara's red rockfish, raw meats of shellfishes such as an ark shell and a scallop, raw meats of Cephalopoda such as an octopus and a squid, raw meats of Crustacea such as a shrimp, a crab and a brit, and processed products thereof.

By softening such animal-based food materials using the softening method with the enzyme treatment solution of the present invention (that is, the softening method of the present invention), as described below, it is possible to reliably soften the animal-based food material, while maintaining mouthfeel and flavor thereof. This makes it possible to produce a softened animal-based food material which even old persons and persons having difficulty in swallowing/chewing can easily swallow and deliciously eat.

A softening method for softening an animal-based food material according to this embodiment includes: [1] an enzyme treatment step in which the animal-based food material is subjected to an enzyme treatment using an enzyme treatment solution; [2] an enzyme reaction/deactivation treatment step in which a proteolytic enzyme is reacted, and then deactivated; and [3] a storage treatment step in which the animal-based food material is frozen or dried.

By passing through such steps, it is possible to reduce a molecular weight of a protein or a peptide which is a component of the animal-based food material due to uniform breakage of the entirety of a molecular chain of the protein or the peptide, while maintaining mouthfeel and flavor of the animal-based food material. As a result, the animal-based food material can be softened in a state that a shape thereof is kept.

Hereinbelow, each of the steps will be described in detail.

### [1] Enzyme treatment step

First, prepared is the animal-based food material to be softened.

Here, in the case where the meat is softened, the animal-based food material (animal based food) to be prepared may be the dressed meat or the processed product such as a ham or a sausage. Further, in the case where the fish or the Cephalopoda is softened, it may be a fillet from which a skin, internal organs and the like are removed or may be directly subjected to the enzyme treatment without being especially pre-treated. Furthermore, in the case where the shellfish or the Crustacea is softened, a shell may or may not be removed therefrom.

Next, the prepared animal-based food material is subjected to an enzyme treatment using an enzyme treatment solution whose pH is 8.0 or higher but lower than 10.5 and whose salimeter measurement value, which is obtained by measuring an amount of electrolyte contained therein using a salimeter as a salt concentration, is 0.7% or more but less than 3.0% (that is, an enzyme treatment solution of the present invention). Hereinbelow, the above-mentioned salimeter measurement value obtained using the salimeter will be simply referred to as the "salimeter measurement value" on occasion.

Here, hardness of the animal-based food material depends on amounts and qualities of a muscle connective tissue, a muscle fibril and the like contained in a skeletal muscle. Therefore, by reducing molecular weights of proteins which are major components of the muscle connective tissue such as collagen and elastin and molecular weights of proteins which are major components of the muscle fibril such as actin and myosin due to decomposition (breakage) thereof under the action of a proteolytic enzyme contained in the enzyme treatment solution, it is possible to soften the animal-based food material.

Meanwhile, when the molecular weights of the proteins are reduced with the proteolytic enzyme, if an enzyme treatment solution different from the enzyme treatment solution to be used in the softening method of the present invention (that is, the enzyme treatment solution of the present invention) is used, that is, if an enzyme treatment solution whose pH is not 8.0 or higher but lower than 10.5 and whose salimeter measurment value is not 0.7% or more but less than 3.0% is used, the following problems will occur although the animal-based food material is softened.
Namely, as the molecular weights of the proteins are reduced, a shape keeping property or a water holding property of the animal-based food material is lowered. This causes losing of juiciness or flavor of the animal-based food material. Further, the muscle fibril becomes a lever-like state (paste state), or water excessively flows out from the animal-based food material due to water separation and thus dryness of the animal-based food material is increased. This causes losing of mouthfeel like eating a meat, that is, losing of meat mouthfeel.

In other words, even if an animal-based food material is subjected to an enzyme treatment using the conventional enzyme treatment solution whose pH and salimeter measurement value are set to values not falling within appropriate ranges, the animal-based food material also can be softened so that the old persons or the persons having difficulty in swallowing/chewing can eat it. However, since the animal-based food material has mouthfeel such as low juiciness and inferior meat mouthfeel, awful flavor and the like, it is difficult to say that such an animal-based food material can be deliciously eaten.

After an exhaustive study of solving such problems by the present inventor, it was gradually revealed that pH of the enzyme treatment solution and the amount of the electrolyte affect the mouthfeel, the flavor and the like of the softened animal-based food material. A further study of the present inventor has revealed that the above-mentioned problems can be solved by setting the pH of the enzyme treatment solution to 8.0 or higher but lower than 10.5 and by setting the salimeter measurement value obtained by measuring the amount of electrolyte contained therein using the salimeter as the salt concentration to 0.7% or more but less than 3.0%. As a result, the present inventor has completed the present invention.

The enzyme treatment solution contains a proteolytic enzyme for softening the animal-based food material by reducing molecular weights of proteins contained therein.

Such a proteolytic enzyme is not limited to a specific type, but an enzyme having an activity within an alkaline region can be preferably used as the proteolytic enzyme.

Examples of the proteolytic enzyme having the activity within the alkaline region include an enzyme of plant origin such as papain, bromelain, ficin or actinidine, an enzyme originating in a microorganism such as *Bacillus* or *Aspergillus,* an enzyme of animal origin such as trypsin, cathepsin or leucine aminopeptidase, and the like. One selected from these proteolytic enzymes or a combination of two or more selected therefrom can be used.
Further, an enzyme preparation containing the above proteolytic enzyme also can be used. The above proteolytic enzyme can more reliably keep the activity thereof within 8.0 or higher but lower than 10.5 in pH.

Further, since an amount of the proteolytic enzyme contained in the enzyme treatment solution is slightly varied depending on the kind thereof, it is not limited to a specific value. The amount of the proteolytic enzyme contained in the enzyme treatment solution is preferably set to a value falling within 5.0×10⁻⁴ to 3.0 wt%, and more preferably set to a value falling within 1.0×10⁻³ to 1.0 wt%. This makes it possible to exhibit the above-mentioned effects more remarkably.

Furthermore, the pH of the enzyme treatment solution is 8.0 or higher but lower than 10.5, but is preferably 9.0 or higher but lower than 10.5. This also makes it possible to exhibit the above-mentioned effects more remarkably.

Moreover, the salimeter measurement value is 0.7% or more but less than 3.0%, but is preferably 1.3 or more but less than 2.5%. This also makes it possible to exhibit the above-mentioned effects more remarkably.

Here, the salimeter measurement value [%] can be obtained by measuring electric conductivity of the enzyme treatment solution [S/m], calculating an electrolytic concentration contained in the enzyme treatment solution based on the measured electric conductivity, and then converting the electrolytic concentration into a salt concentration based on the calculated value of the electrolyte. Such a salimeter measurement value can be, for example, measured using a salimeter ("ES-421" produced by ATAGO CO., LTD.).

Further, each of the pH and the salimeter measurement value of the enzyme treatment solution can be easily set to a value falling within the above-mentioned range by appropriately adjusting kinds and concentrations of a pH adjuster and a food additive such as a seasoning.

Examples of the pH adjuster include, but are not especially limited to, hydrochloric acid, tartaric acid, adipic acid, citric acid, gluconic acid, succinic acid, acetic acid, carbonic acid, lactic acid, pyrophosphoric acid, fumaric acid, malic acid, phosphoric acid, metal salts thereof such as a sodium salt thereof, a potassium salt thereof, a calcium salt thereof and a magnesium salt thereof, and the like. One selected from these pH adjusters or a combination of two or more selected therefrom can be used.

Further, examples of the seasoning include, but are not especially limited to, a component capable of being dissolved into the enzyme treatment solution, to thereby influence the salt concentration and the pH thereof such as sugar, salt, vinegar, soy sauce, fish sauce, miso, sake, sweet sake, worcestershire sauce, ketchup, oyster sauce, ketchup mannis, salsa, sambal source, chili sauce, mustard, fat and oil, chili oil, bean cheese, spice, herb, curry powder, hishio, baste, noodle sauce, warishita, sweetener, flavor seasoning, food extract, soup or chicken soup, and the like. One selected from these seasonings or a combination of two or more selected therefrom can be used.

Further, it is preferred that the enzyme treatment solution contains a thickening agent (thickening stabilizer). This makes it possible to further improve the mouthfeel such as the juiciness or the meat mouthfeel of the treated animal-based food material and to easily swallow it.

As the thickening agent, a food polysaccharide can be used. Concrete examples of the food polysaccharide include starch, curdlan, pectin, cyamoposis gum, xanthan gum, Tamarind seed gum, cellulose, glucomannan, carageenan, propylene glycol, carboxy methyl cellulose sodium (CMC), arabian gum, tragacanth gum, Psylium seed gum, tara gum, alginic acid, furcellaran, gellant gum, pullulan, chitosan, Locust bean gum and the like. One selected from these food polysaccharides or a combination of two or more selected therefrom can be used.
Among the above-mentioned thickening agents, preferable is especially at least one of the xanthan gum, the carageenan and the Locust bean gum. The xanthan gum, the carageenan and the Locust bean gum have more excellent water holding properties. This makes it possible to more reliably suppress or prevent water separation from occurring in the softened animal-based food material.

In this regard, it is to be noted that the enzyme treatment solution may contain antioxidants such as ferulic acid, amino acids such as arginine, glutamine and glycine, vitamins or minerals in addition to the above components.

Examples of a liquid to be used for preparing the enzyme treatment solution described above include water and alcohols such as ethanol. One selected from these liquids or a combination of two or more selected therefrom can be used.

Further, examples of a method of supplying the enzyme treatment solution into the animal-based food material include, but are not especially limited to, a method of injecting the enzyme treatment solution into the animal-based food material (that is, an injection method), a method of spraying the enzyme treatment solution onto the animal-based food material (that is, a spray method), a method of applying the enzyme treatment solution onto the animal-based food material (that is, an application method), a method of dipping the animal-based food material into the enzyme treatment solution (that is, a dipping method), a vacuum impregnation method, and the like.

Among them, the injection method is preferably used. This is because by using the injection method, the enzyme treatment solution can be appropriately supplied (injected) into the animal-based food material in a desired amount thereof. Further, by using the injection method, even in the case where the enzyme treatment solution is injected into an animal-based food material having a relatively thick thickness, it can be uniformly injected along a thickness direction of the animal-based food material, to thereby also soften an inside thereof uniformly. From such a viewpoint, the injection method is also preferably used.

In this regard, specifically, the injection method is appropriately used for an animal-based food material preferably having a thickness of 5 mm or more, and more preferably having a thickness of about 10 to 50 mm.

Further, although the injection method, in which the enzyme treatment solution is injected into the animal-based food material, is not limited to a specific kind, it is preferably a method using an injection machine described below.

Such an injection machine includes a plurality of injection needles provided at substantially regular intervals, and a liquid transferring section for transferring the enzyme treatment solution in a pressure state to the injection needles. In the above injection method, the plurality of injection needles prick the animal-based food material, and then in this state, the enzyme treatment solution is transferred to the injection needles from the liquid transferring section, and thus injected into the animal-based food material.

According to the injection method using such an injection machine, the enzyme treatment solution can be injected into a broad area of the animal-based food material by a single operation. This makes it possible to shorten a processing time to be required for injecting the enzyme treatment solution. Such an injection machine is also preferably used from the viewpoint that the enzyme treatment solution can be uniformly injected into the entirety of the animal-based food material.

An amount of the enzyme treatment solution to be supplied into the animal-based food material is slightly varied depending on the kind of the animal-based food material to be softened, but is preferably in the range of 10 to 80 wt%, and more preferably in the range of 10 to 50 wt% with respect to an initial weight of the animal-based food material (that is, a weight of the animal-based food material into which the enzyme treatment solution is not injected yet).

Further, when the enzyme treatment solution is injected into the animal-based food material, a temperature of the enzyme treatment solution in not limited to a specific value, but is preferably in the range of about 0 to 25°C, and more preferably in the range of about 0 to 15°C. This makes it possible to supply the enzyme treatment solution into the animal-based food material, while appropriately suppressing or preventing the proteolytic enzyme contained in the enzyme treatment solution from being deactivated. Therefore, it is possible to uniformly immerse the enzyme treatment solution into the animal-based food material.

As described above, in the case of the animal-based food material having the relatively thick thickness, the injection method is appropriately used. On the other hand, in the case where softened is an animal-based food material having a thickness of 5 mm or less, an animal-based food material having a relatively thin thickness such as an animal-based food material having a size of 3 cm or less in each of a length and a width like a shrimp or an animal-based food material having a compact size, the spray method, the application method, the dipping method or the vacuum impregnation method is appropriately used as the method of supplying the enzyme treatment solution into the animal-based food material.

An enzyme reaction of components of the animal-based food material with the enzyme treatment solution (enzyme) supplied into the animal-based food material in the above way is, for example, preferably carried out under the following conditions, but is not limited thereto.

When the enzyme reaction is carried out (at a lower temperature), a temperature of the animal-based food material is preferably in the range of about 0 to 35°C, and more preferably in the range of about 5 to 15°C.

In the case where the temperature is set to a value falling within the above range, a time of the enzyme reaction is preferably in the range of about 1 to 24 hours, and more preferably in the range of about 5 to 18 hours.

Further, when the enzyme reaction is carried out, it is preferred that the animal-based food material is subjected to vibration such as ultrasound transducer or tumbling to such a degree that the shape of the animal-based food material is not deformed. This makes it possible to more uniformly soften the entirety of the animal-based food material with the enzyme, to thereby obtain an animal-based food material softened more uniformly.

### [2] Enzyme reaction (at high temperature) / deactivation heat treatment step

Next, the softened animal-based food material is subjected to a heat treatment for reacting the proteolytic enzyme contained therein (at a high temperature) and deactivating it.

This makes it possible to finish a final enzyme reaction and to inhibit the enzyme reaction in the softened animal-based food material from further progressing during storage thereof or the like. Therefore, it is possible to prevent generation of deformation of the animal-based food material, losing of the flavor thereof and the like.

Examples of such a deactivation treatment include, but are not especially limited to, a heat treatment in which the animal-based food material subjected to the enzyme treatment is heated, a treatment in which the animal-based food material subjected to the enzyme treatment makes contact with an acid solution (that is, a treatment in which the animal-based food material subjected to the enzyme treatment is immersed into the acid solution, or the like) and the like. It is preferred that the enzyme is deactivated using the heat treatment.
By using the heat treatment, the enzyme can be deactivated without making the softened animal-based food material contact with another treatment solution (e.g., an acid solution). This makes it possible to reliably prevent occurrence of the water separation, the deformation or the like which would be resulted from contact of the new treatment solution.

Examples of a method for the heat treatment include, but are not especially limited to, a method of heating the animal-based food material under the humidification condition, a method of putting the animal-based food material close to a flame or making it contact with the flame, a method of induction heating the animal-based food material and the like. One selected from these methods or a combination of two or more selected therefrom can be used.

Among them, the method of heating the animal-based food material under the humidification condition is preferably used as the method for the heat treatment. By using such a method, even a central portion of the animal-based food material can be heated at a substantially uniform temperature during the heat treatment, without charring a surface of the animal-based food material. As a result, the proteolytic enzyme contained therein can be deactivated uniformly.

Further, a temperature of heating the animal-based food material is slightly varied depending on a time of subjecting it to the heat treatment, but is preferably in the range of about 60 to 120°C, and more preferably in the range of about 70 to 115°C. By setting the temperature to a value falling within the range, it is possible to reliably deactivate the proteolytic enzyme contained in the animal-based food material, while suppressing or preventing the animal-based food material from being hardened due to the heat.

Furthermore, humidity of an atmosphere, in which the animal-based food material is heated, is preferably in the range of about 60 to 100%RH, and more preferably in the range of about 85 to 100%RH in relative humidity. By subjecting the animal-based food material to the heat treatment under the humidification condition having humidity falling within the above range, even the central portion of the animal-based food material can be uniformly heated, without, for example, deforming (degenerating) an outer surface thereof.

Moreover, since the time of heating the animal-based food material is slightly varied depending on the temperature of heating it, it is not limited to a specific value. In the case where the temperature is set to a value falling within the above range, the time is preferably in the range of about 5 to 60 minutes, and more preferably in the range of about 10 to 30 minutes.
By heating the animal-based food material at such a time, it is possible to more reliably and uniformly heat even the central portion of the animal-based food material (that is, the entirety of the animal-based food material), to thereby deactivate the proteolytic enzyme contained therein. Further, it is also possible to more reliably prevent the outer surface of the animal-based food material from being charred.

### [3] Storage treatment step

Next, the softened animal-based food material, in which the proteolytic enzyme has been deactivated, is subjected to a storage treatment for storing it for a long period of time.

This makes it possible to appropriately store the softened animal-based food material for a long period of time and eat the softened animal-based food material as a food at a desired time.

Examples of the storage treatment for the softened animal-based food material include, but are not especially limited to, a method of freezing it and a method of drying it.

As the method of freezing the softened animal-based food material, any methods may be used, but a quick freezing method, which is carried out using liquid nitrogen, cold alcohol or the like, is preferably used. Further, the quick freezing method also can be carried out using a freezing machine capable of freezing a material.
The use of such a method makes it possible to appropriately suppress or prevent ice crystals from being produced in the softened animal-based food material. Therefore, it is possible to more effectively prevent the softened animal-based food material from being deformed or prevent water separation from occurring in the softened animal-based food material, when the softened animal-based food material, which has been frozen, is defrosted.

A temperature of quick freezing the softened animal-based food material is preferably -20°C or lower, and more preferably in the range of about -25 to -40°C. This makes it possible to pass the softened animal-based food material through a temperature range of 0 to -5°C, within which the ice crystals would be produced therein, at a relatively short time (specifically, within 30 minutes). Therefore, it is possible to more appropriately suppress the ice crystals from being produced.

In this regard, examples of a method of defrosting the softened animal-based food material, which has been frozen, include, but are not especially limited to, a method of dielectrically heating it, a method of steaming it, a method of dropping it in boiling water, a method of washing it and the like. One selected from these methods or a combination of two or more selected therefrom can be used.

On the other hand, as the method of drying the softened animal-based food material, any methods may be used, but a dry storage method such as a deep frying method, a cold-air drying method, a hot-air drying method, a vacuum drying method and a freeze drying method can be used. Among them, it is especially preferable to use the freeze drying method. This is because the freeze drying method can appropriately restore the mouthfeel and the flavor of the animal-based food material.
In the case where such a freeze drying method is used, the softened animal-based food material, which has been dried, can be eaten by being restored using water or boiling water into the softened animal-based food material. Further, by drying the softened animal-based food material, it is possible to handle and distribute it at normal temperature.

Further, the water or the boiling water to be used for restoring the softened animal-based food material may further contain a contrast medium. This makes it possible to obtain an advantage that the softened animal-based food material can be used for a contrast examination of evaluating a function of an oral cavity, a throat, a gullet or a digestive tract (e.g., a X-ray examination, VF (swallowing contrast examination), CT, 3DCT, MRI, PET).

Examples of the contrast medium include, but are not especially limited to, an iodine contrast medium (e.g., an iodine contrast medium containing iodixanol, iohexol, iopamidol, iomeprol, iopromide, ioversol, ioxilan, iotrolan, amidotrizoic acid, iotroxatic acid, iotalamic acid meglumine, iotalamic acid, ioxaglic acid, meglumine, iodized poppy oil fatty acid ethyl ester, iopanoic acid or the like), a gadolinium compound contrast medium (e.g., a contrast medium containing gadopentetic acid meglumine, gadoteridol or the like), barium sulfate, a ferric oxide contrast medium (e.g., a contrast medium containing citric acid ferric ammonium or the like), and the like. One selected from these contrast media or a combination of two or more selected therefrom can be used.

Furthermore, the water or the boiling water to be used for restoring the softened animal-based food material may further contain a food additive. This makes it possible to impregnate the food additive, which is not inherently contained in the animal-based food material, into the inside of the softened animal-based food material.

In this regard, as the food additive, the pH adjuster and the seasoning each described in the enzyme treatment step [1] as well as a thickening agent and the like can be used.

Further, in the case where the water or the boiling water contains at least one of the contrast medium and the food additive, the water or the boiling water to be used for restoring the softened animal-based food material may be an aqueous solution containing the contrast medium and/or the food additive or may be an aqueous suspension containing the contrast medium and/or the food additive.

As a restoration method, for example, a method of dropping, applying or spraying the water or the boiling water onto the softened animal-based food material which has been dried (that is, a dried material), a method of dipping the dried material into the water or the boiling water or the like can be used. Further, when needed, the softened animal-based food material, which has been restored, may be heated up to a temperature suitable for eating it using a heater such as a microwave oven or a steam convection oven.

In this regard, it is to be noted that the softening method of the present invention may not include any one of the step [2] and the step [3] described in this embodiment. Further, the softening method of the present invention may include arbitrary steps such as an anhydration step in which water contained in the animal-based food material is removed prior to the enzyme treatment step [1]. By including such a step, it is possible to improve a ratio of impregnating (penetrating) the enzyme treatment solution into the animal-based food material.

In this anhydration step, examples of a method of removing the water include, but are not especially limited to, a heat drying method, a hot-air drying method, a cold-air drying method, a freeze drying method, a salting method, a centrifuge method, a deep frying method, a method using capillarity and the like. One selected from these methods or a combination of two or more selected therefrom can be used.

The heat drying method is, for example, a method of removing the water as drips from the animal-based food material by hermetically sealing it into a hermetic container, and then dipping the hermetic container into boiling water or the like, to thereby heat the animal-based food material at a temperature of 50 to 90°C.

Further, the hot-air drying method or the cold-air drying method is, for example, a method of evaporating and removing the water from the animal-based food material by spraying it with air having a temperature of 10 to 120°C.

The freeze drying method is, for example, a method of subliming and removing the water from the animal-based food material by cooling and freezing the animal-based food material at a temperature of about -20 to -80°C, and then placing it into a vacuum.

The salting method is, for example, a method of removing the water from the animal-based food material by contacting it with a 5% or more saline solution or a slurry obtained by mixing salt and water.

The centrifuge method is, for example, a method of removing the water from the animal-based food material by placing it into a cage container and rotating the cage container using a machine such as a centrifugal dryer.

The deep frying method is, for example, a method of removing the water from the animal-based food material by heating it in an edible oil and fat which has been adjusted to a temperature of about 70 to 180°C.

Furthermore, a method using capillarity is, for example, a method of removing the water from the animal-based food material by placing it between kitchen papers laminated together.

Through the above steps, it is possible to obtain a softened animal-based food material of the present invention in a frozen state or a dried state.
In the case where such a softened animal-based food material is restored by being defrosted or soaked with water, it can have a shape substantially equal to a shape of the animal-based food material which has not been softened.

Such a softened animal-based food material can be sufficiently softened and have excellent mouthfeel such as juiciness and meat mouthfeel. Further, in the softened animal-based food material, losing of the flavor thereof and the like is reliably prevented.

This makes it possible to increase appetite of old persons or persons having difficulty in swallowing/chewing. Therefore, it is expected that they can deliciously eat the softened animal-based food material. Further, even the old persons or the persons having difficulty in swallowing/chewing can swallow such a softened animal-based food material.

In a state that the softened animal-based food material, which has been dried, is restored by being soaked with water or the softened animal-based food material, which has been frozen, is restored by being defrosted, that is, in a state that the softened animal-based food material is not dried or frozen, compressive stress thereof, which is measured according to a "test method for a food material suitable for patients with disturbance of swallowing", is preferably 1×10⁵ N/m² or less, and more preferably 5×10⁴ N/m² or less. By satisfying such a value, it becomes possible for even the olds or the patients to reliably chew and swallow the softened animal-based food material.

While the enzyme treatment solution, the softening method and the softened animal-based food material of the present invention have been described based on the above embodiment, the present invention is not limited thereto.

For example, the softening method may include one step or two or more steps for arbitrary purpose(s).

### EXAMPLES

Next, description will be made on concrete examples of the present invention.

### 1. Examination of kind of enzyme treatment solution

### 1-1. Preparation of enzyme treatment solution

### (Enzyme treatment solution 1A)

A proteinase of *Aspergillus* origin was prepared as a proteolytic enzyme and salt was prepared as a seasoning. They were dissolved into a deionized water treated with an ion exchange resin so that an amount of the proteinase would become 0.20 wt% and an amount of the salt would become 0.18 wt%. In this way, an enzyme treatment solution 1A was prepared. In this regard, pH of the enzyme treatment solution 1A was 5.5 and a salimeter measurement value thereof was 0.18%.

### (Enzyme treatment solution 1B)

An enzyme treatment solution 1B was prepared in the same manner as the enzyme treatment solution 1A except that sodium carbonate was prepared as a pH adjuster in addition to the proteolytic enzyme and the seasoning, and then dissolved into the enzyme treatment solution 1A so that an amount thereof would become 0.7 wt%. In this regard, pH of the enzyme treatment solution 1B was 11.3 and a salimeter measurement value thereof was 0.69%.

### (Enzyme treatment solution 1C)

An enzyme treatment solution 1C was prepared in the same manner as the enzyme treatment solution 1A except that sodium bicarbonate was prepared as a pH adjuster in addition to the proteolytic enzyme and the seasoning, and then dissolved into the enzyme treatment solution 1A so that an amount thereof would become 0.7 wt%. In this regard, pH of the enzyme treatment solution 1C was 8.3 and a salimeter measurement value thereof was 0.45%.

### (Enzyme treatment solution 1D)

Papain was prepared as a proteolytic enzyme. It was dissolved into a deionized water treated with an ion exchange resin so that an amount thereof become 3.0 wt%. In this way, an enzyme treatment solution 1D was prepared. In this regard, pH of the enzyme treatment solution 1D was 5.2 and a salimeter measurement value thereof was 0.09%.

### (Enzyme treatment solution 1E)

An enzyme treatment solution 1E was prepared in the same manner as the enzyme treatment solution 1A except that sodium carbonate and sodium bicarbonate were prepared as a pH adjuster in addition to the proteolytic enzyme and the seasoning, and then dissolved into the enzyme treatment solution 1A an amount of the sodium carbonate would become 0.7 wt% and an amount of the sodium bicarbonate would become 0.2 wt%. In this regard, pH of the enzyme treatment solution 1E was 10.0 and a salimeter measurement value thereof was 0.78%.

### 1-2. Production of softened animal-based food material

In each of the following Example and Comparative Examples, a softened animal-based food material was produced by softening an animal-based food material using an enzyme treatment solution having a different pH and a different salimeter measurement value.

### (Comparative Example 1A)

### <1> Enzyme treatment step

First, a raw chicken breast trimming off fat was cut into 5 pieces each having a thickness of about 15 mm (average weight: about 40 g). Next, the enzyme treatment solution 1A was injected into each of the pieces using an injection machine ("Super Mini Injector" produced by Tohnichi) in an injection amount of 50 wt% with respect to a weight (initial weight) of the raw chicken breast. In this regard, the injection machine has 30 injection needles each provided within one area having a size of 1 cm square.

Next, the chicken breast, into which the enzyme treatment solution 1A was injected, was placed into a refrigerating room of 4°C, and then stilly stood for 18 hours. In this way, the chicken breast was reacted with the proteolytic enzyme.

### <2> Enzyme deactivation treatment step

Next, the chicken breast subjected to the enzyme reaction treatment was heated using a steam convection oven ("SelfCooking Center 61 type" produced by RATIONAL) under the conditions in which relative humidity was 80%RH, a temperature inside was 80°C and a heat time was 20 minutes, so that a temperature of an inside of the chicken breast would become 75°C or higher. In this way, the enzyme was deactivated.

### <3> Storage treatment step

Next, the chicken breast subjected to the enzyme deactivation treatment (that is a softened chicken breast) was quickly frozen using a quick freezing machine ("Blast Freezer QXF-006S5" produced by FUKUSHIMA INDUSTRIES CORP.), so that a central temperature thereof would become down to -35°C.

In this way, a softened animal-based food material of the chicken breast in a frozen state was obtained.

### (Comparative Examples 1B to 1D and Example 1E)

A softened animal-based food material of a chicken breast in a frozen state was produced in the same manner as Comparative Example 1A except that each of the enzyme treatment solutions 1B to 1E was used instead of the enzyme treatment solution 1A as the enzyme treatment solution to be used in the enzyme treatment step <1>.

### 1-3. Evaluation

The softened animal-based food materials of the chicken breast in the frozen state produced in Comparative Examples 1A to 1D and Example 1E were defrosted by being heated using the steam convection oven ("SelfCooking Center 61 type" produced by RATIONAL) under the conditions in which relative humidity was 100%RH, a temperature inside was 70°C and a heat time was 30 minutes. The softened animal-based food materials, which were defrosted, were evaluated on the following items 1-3-1 to 1-3-4.

### 1-3-1. Hardness (compressive stress)

Hardness (compressive stress) was measured according to a "test method for a food material suitable for patients with disturbance of swallowing" described in "Notice on a labeling approval of foods for special dietary uses and the like (Notice No. 0212001 of the Department of Food Safety, the Pharmaceutical and Food Safety Bureau of the Ministry of Health, Labour and Welfare of Japan, February 12, 2009".
Namely, the defrosted chicken breast (that is, the softened animal-based food material) was, first, filled into a container having a diameter of 40 mm and a height of 20 mm as a sample, so that the sample would reach to a height of 15 mm from a bottom of the container. Thereafter, a plunger having a diameter of 20 mm and a height of 8 mm was inserted into the container using a rheometer ("RE2-33005S" produced by yamaden co., ltd.) capable of measuring compressive stress of the sample by linear motion at a compressive speed of 10 mm/sec.
In this regard, the compressive stress (N/m²) was measured by moving the plunger down a height of 10 mm from an upper end of the sample so that a clearance of 5 mm from the bottom of the container was left. Here, the clearance means a distance between a tip of the plunger and a zero point (that is, a lower end of the sample).

Further, a measurement temperature was set to 20 ± 2°C.

### 1-3-2. Mouthfeel

The defrosted chicken breast (that is, the softened animal-based food material) was eaten as a sample. If a case that fiber feel existed in the defrosted chicken breast, but it could be deformed using a tongue, thereby being smoothly mashed is defined as "Good" and a case that the defrosted chicken breast was sticky and became adhesive is defined as "bad", mouthfeel thereof was evaluated based on the following criteria including 5 categories "5: Good, 4: Slightly good, 3: Good and bad, 2: Slightly bad, 1: Bad". Such an evaluation of the mouthfeel was carried out by 11 panelists, an average value of evaluation results obtained from the panelists was calculated.

### 1-3-3. Flavor

The defrosted chicken breast (that is, the softened animal-based food material) was eaten as a sample. If a case that the defrosted chicken breast has flavor similar to that of a chicken breast cooked using a general recipe without being softened (that is, an animal-based food material which has not been softened) or has its own flavor is defined as "Good" and a case that the defrosted chicken breast has chemical flavor or unusual flavor such as bitter flavor is defined as "bad", flavor thereof was evaluated based on the following criteria including 5 categories "5: Good, 4: Slightly good, 3: Good and bad, 2: Slightly bad, 1: Bad". Such an evaluation of the flavor was carried out by 11 panelists, an average value of evaluation results obtained from the panelists was calculated.

### 1-3-4. Ease of swallow

The defrosted chicken breast (that is, the softened animal-based food material) was eaten as a sample. If a case that the defrosted chicken breast could be easily swallowed is defined as "Good" and a case that the defrosted chicken was difficult to be swallowed and became adhesive is defined as "bad", ease of swallow (smoothness) thereof was evaluated based on the following criteria including 5 categories "5: Good, 4: Slightly good, 3: Good and bad, 2: Slightly bad, 1: Bad". Such an evaluation of the ease of swallow was carried out by 11 panelists, an average value of evaluation results obtained from the panelists was calculated.

These results are shown in Table 1.

[Table 1]

**Table 1**

| | Animal material | Enzyme treatment solution | | | | Physical property value | Sensory evaluation | | |
|---|---|---|---|---|---|---|---|---|---|
| | | pH | Salimeter measurement value [%] | pH adjuster | Proteolytic enzyme | Hardness (N/m²) | Mouth-feel | Flavor | Ease of swallow |
| Comp. Ex. 1A | Chicken breast | 5.5 | 0.18 | - | Aspergillus origin | 2.6×10⁴ | 1.4 | 1.4 | 1.4 |
| Com. Ex. 1B | Chicken breast | 11.3 | 0.69 | Sodium carbonate | Aspergillus origin | 4.3×10⁴ | 4.0 | 1.2 | 2.9 |
| Com. Ex. 1C | Chicken breast | 8.3 | 0.45 | Sodium bicarbonate | Aspergillus origin | 3.10⁴ | 3.5 | 4.1 | 2.9 |
| Comp. Ex. 1D | Chicken breast | 5.2 | 0.09 | - | Papain | 2.5×10⁴ | 1.3 | 1.3 | 1.1 |
| Ex. 1E | Chicken breast | 10.0 | 0.78 | Sodium carbonate Sodium bicarbonate | Aspergillus origin | 3.8×10⁴ | 4.2 | 4.3 | 4.2 |

As shown in Table 1, by appropriately adjusting the pH of the enzyme treatment solution and the salimeter measurement value obtained by measuring the electrolyte concentration of the enzyme treatment solution using the salimeter as the salt concentration, it is obvious that the animal-based food material can be softened, while maintaining the mouthfeel, the flavor and the ease of swallow thereof.

### 2. Examination of pH of enzyme treatment solution

### 2-1. Preparation of enzyme treatment solution

### (Enzyme treatment solution 2A)

Papain was prepared as a proteolytic enzyme and salt and AJIPULSE SS (produced by KOHJIN Co., Ltd.) were prepared as a seasoning. The papain was dissolved into a deionized water treated with an ion exchange resin so that an amount thereof would become 0.05 wt%. Thereafter, the salt and the AJIPULSE SS were added thereto so that a salimeter measurement value of an enzyme treatment solution to be obtained would become 0.7% or more. In this way, an enzyme treatment solution 2A was prepared. In this regard, pH of the enzyme treatment solution 2A was 5.90 and a salimeter measurement value thereof was 0.75%.

### (Enzyme treatment solution 2B)

An enzyme treatment solution 2B was prepared in the same manner as the enzyme treatment solution 2A except that potassium carbonate and citric acid were added to the enzyme treatment solution 2A in addition to the proteolytic enzyme so that pH of an enzyme treatment solution to be obtained would become a value falling within 8.0 to 8.8. In this regard, pH of the enzyme treatment solution 2B was 8.26 and a salimeter measurement value thereof was 0.85%.

### (Enzyme treatment solution 2C)

An enzyme treatment solution 2C was prepared in the same manner as the enzyme treatment solution 2A except that potassium carbonate and citric acid were added to the enzyme treatment solution 2A in addition to the proteolytic enzyme so that pH of an enzyme treatment solution to be obtained would become a value falling within 9.0 to 10.3. In this regard, pH of the enzyme treatment solution 2C was 9.59 and a salimeter measurement value thereof was 1.38%.

### (Enzyme treatment solution 2D)

An enzyme treatment solution 2D was prepared in the same manner as the enzyme treatment solution 2A except that potassium carbonate and citric acid were added to the enzyme treatment solution 2A in addition to the proteolytic enzyme so that pH of an enzyme treatment solution to be obtained would become a value falling within 10.5 to 11.3. In this regard, pH of the enzyme treatment solution 2D was 10.72 and a salimeter measurement value thereof was 0.75%.

### (Enzyme treatment solution 2E)

An enzyme treatment solution 2E was prepared in the same manner as the enzyme treatment solution 2A except that potassium carbonate and citric acid were added to the enzyme treatment solution 2A in addition to the proteolytic enzyme so that pH of an enzyme treatment solution to be obtained would become a value falling within 11.5 or higher. In this regard, pH of the enzyme treatment solution 2E was 11.51 and a salimeter measurement value thereof was 0.98%.

### 2-2. Production of softened animal-based food material

In each of the following Examples and Comparative Examples, a softened animal-based food material was produced using an enzyme treatment solution having a different pH value.

### (Comparative Example 2A-chicken, Example 2B-chicken, Example 2C-chicken, Comparative Example 2D-chicken, Comparative Example 2E-chicken)

A softened animal-based food material (chicken breast) of each of Comparative Example 2A-chicken, Example 2B-chicken, Example 2C-chicken, Comparative Example 2D-chicken and Comparative Example 2E-chicken in a frozen state was produced in the same manner as Comparative Example 1A except that each of the enzyme treatment solutions 2A to 2E was used instead of the enzyme treatment solution 1A as the enzyme treatment solution to be used in the enzyme treatment step <1>.

### (Comparative Example 2A-pork, Example 2B-pork, Example 2C-pork, Comparative Example 2D-pork, Comparative Example 2E-pork)

A softened animal-based food material (pork leg) of each of Comparative Example 2A-pork, Example 2B-pork, Example 2C-pork, Comparative Example 2D-pork and Comparative Example 2E-pork in a frozen state was produced in the same manner as Comparative Example 1A except that a pork leg trimming off fat was prepared instead of the chicken breast as the animal-based food material to be softened, and each of the enzyme treatment solutions 2A to 2E was used instead of the enzyme treatment solution 1A as the enzyme treatment solution to be used in the enzyme treatment step <1>.

### (Comparative Example 2A-beef, Example 2B-beef, Example 2C-beef, Comparative Example 2D-beef, Comparative Example 2E-beef)

A softened animal-based food material (beef leg) of each of Comparative Example 2A-beef, Example 2B-beef, Example 2C-beef, Comparative Example 2D-beef and Comparative Example 2E-beef in a frozen state was produced in the same manner as Comparative Example 1A except that a beef leg trimming off fat was prepared instead of the chicken breast as the animal-based food material to be softened, and each of the enzyme treatment solutions 2A to 2E was used instead of the enzyme treatment solution 1A as the enzyme treatment solution to be used in the enzyme treatment step <1>.

### (Comparative Example 2A-mackerel, Example 2B-mackerel, Example 2C-mackerel, Comparative Example 2D-mackerel, Comparative Example 2E-mackerel)

A softened animal-based food material (mackerel) of each of Comparative Example 2A-mackerel, Example 2B-mackerel, Example 2C-mackerel, Comparative Example 2D-mackerel and Comparative Example 2E-mackerel in a frozen state was produced in the same manner as Comparative Example 1A except that a mackerel fillet was prepared instead of the chicken breast as the animal-based food material to be softened, and each of the enzyme treatment solutions 2A to 2E was used instead of the enzyme treatment solution 1A as the enzyme treatment solution to be used in the enzyme treatment step <1>.

### (Comparative Example 2A-scallop, Example 2B-scallop, Example 2C-scallop, Comparative Example 2D-scallop, Comparative Example 2E-scallop)

A softened animal-based food material (scallop adductor muscle) of each of Comparative Example 2A-scallop, Example 2B-scallop, Example 2C-scallop, Comparative Example 2D-scallop and Comparative Example 2E-scallop in a frozen state was produced in the same manner as Comparative Example 1A except that a scallop adductor muscle was prepared instead of the chicken breast as the animal-based food material to be softened, and each of the enzyme treatment solutions 2A to 2E was used instead of the enzyme treatment solution 1A as the enzyme treatment solution to be used in the enzyme treatment step <1>.

### 2-3. Evaluation

The softened animal-based food materials of the chicken breast, the pork leg, the beef leg, the mackerel and the scallop adductor muscle in the frozen state produced in each of Examples and Comparative Examples were defrosted by being heated using the steam convection oven ("SelfCooking Center 61 type" produced by RATIONAL) under the conditions in which relative humidity was 100%RH, a temperature inside was 70°C and a heat time was 30 minutes. The softened animal-based food materials, which were defrosted, were evaluated on the above items 1-3-1 to 1-3-4 in the same manner as Comparative Examples 1A to 1D and Example 1E.

As a result, the softened animal-based food materials, which were defrosted, of the chicken breast, the pork leg, the beef leg, the mackerel and the scallop adductor muscle produced in each of Examples and Comparative Examples are softened so as to have hardnesses of 1×10⁵ N/m² or less, respectively, in the evaluation of hardness described in the item 1-3-1.

Further, when in the evaluations of mouthfeel, flavor and ease of swallow described in the items 1-3-2 to 1-3-4, a case that all obtained average values are 4 or more is defined as "A", a case that all obtained average values are 3 or more is defined as "B", a case that at least one of obtained average values is less than 3 is defined as "C" and a case that two or more obtained average values are less than 3 is defined as "D", performed are comprehensive evaluations of the softened animal-based food materials, which were defrosted, of the chicken breast, the pork leg, the beef leg, the mackerel and the scallop adductor muscle produced in each of Examples and Comparative Examples.

These results of the comprehensive evaluations are shown in Table 2.

[Table 2]

**Table 2**

| Animal material | Relationship between pH and comprehensive evaluation | | | | | | | | | |
|---|---|---|---|---|---|---|---|---|---|---|
| | Lower than 8.0 | | 8.0 or higher, but lower than 8.8 | | 9.0 or higher, but lower than 10.3 | | 10.5 or higher, but lower than 11.3 | | 11.5 or higher | |
| Chicken breast | Comp. Ex. 2A-chicken | C | Ex. 2B-chicken | B | Ex. 2C-chicken | A | Comp. Ex. 2D-chicken | C | Comp. Ex. 2E- chicken | D |
| Pork leg | Comp. Ex. 2A-pork | D | Ex. 2B-pork | C | Ex. 2C-pork | B | Comp. Ex. 2D-pork | C | Comp. Ex. 2E-pork | D |
| Beef leg | Comp. Ex. 2A-beef | D | Ex. 2B-beef | C | Ex. 2C-beef | B | Comp. Ex. 2D-beef | C | Comp. Ex. 2E-beef | D |
| Mackerel | Comp. Ex. 2A-mackerel | C | Ex. 2B-mackerel | B | Ex. 2C-mackerel | A | Comp. Ex. 2D-mackerel | C | Comp. Ex. 2E-mackerel | D |
| Scallop Adductor muscle | Comp. Ex. 2A-scallop | C | Ex. 2B-scallop | B | Ex. 2C-scallop | A | Comp. Ex. 2D-scallop | C | Comp. Ex. 2E- scallop | D |

As shown in Table 2, all the comprehensive evaluations of the softened animal-based food materials of the chicken breast, the mackerel and the scallop adductor muscle produced in each of Examples using the enzyme treatment solution whose pH is set to a value falling within a range of 8.0 or higher but lower than 10.5 are "B" or "A". These results mean that the above animal-based food materials can be softened, while maintaining mouthfeel and flavor thereof.

Further, the comprehensive evaluations of the softened animal-based food materials of the pork leg and the beef leg produced in each of Examples using the enzyme treatment solution whose pH is set to a value falling within a range of 8.0 or higher but lower than 8.8 are slightly bad. However, they improve up to "B" by using the enzyme treatment solution whose pH is set to a value falling within a range of 9.0 or higher but lower than 10.3. These results mean that the above animal-based food materials also can be softened, while maintaining mouthfeel and flavor thereof.

On the other hand, all the comprehensive evaluations of the softened animal-based food materials of the chicken breast, the mackerel and the scallop adductor muscle produced in each of Comparative Examples using the enzyme treatment solution whose pH is set to a value falling within a range of lower than 8.0 or 10.5 or higher are "C" or "D". These results mean that the above animal-based food materials cannot be softened or maintain mouthfeel and flavor thereof.

### 3. Examination of salimeter measurement value of enzyme treatment solution

### 3-1. Preparation of enzyme treatment solution

### (Enzyme treatment solution 3A)

Bromelain was prepared as a proteolytic enzyme, sodium bicarbonate was prepared as a pH adjuster and salt and AJIPULSE SS (produced by KOHJIN Co., Ltd.) were prepared as a seasoning. The bromelain and the sodium bicarbonate were dissolved into a deionized water treated with an ion exchange resin so that an amount of the bromelain would become 0.003 wt% and an amount of the sodium bicarbonate would become 0.8 wt%. Thereafter, the salt and the AJIPULSE SS were added thereto so that a salimeter measurement value of an enzyme treatment solution to be obtained would become 0.5%. In this way, an enzyme treatment solution 3A was prepared. In this regard, pH of the enzyme treatment solution 3A was 8.1 and a salimeter measurement value thereof was 0.50%.

### (Enzyme treatment solution 3B)

An enzyme treatment solution 3B was prepared in the same manner as the enzyme treatment solution 3A except that salt was further added to the enzyme treatment solution 3A so that a salimeter measurement value of an enzyme treatment solution to be obtained would become 0.7%. In this regard, pH of the enzyme treatment solution 3B was 8.1.

### (Enzyme treatment solution 3C)

An enzyme treatment solution 3C was prepared in the same manner as the enzyme treatment solution 3A except that salt was further added to the enzyme treatment solution 3A so that a salimeter measurement value of an enzyme treatment solution to be obtained would become 1.0%. In this regard, pH of the enzyme treatment solution 3C was 8.1.

### (Enzyme treatment solution 3D)

An enzyme treatment solution 3D was prepared in the same manner as the enzyme treatment solution 3A except that salt was further added to the enzyme treatment solution 3A so that a salimeter measurement value of an enzyme treatment solution to be obtained would become 1.3%. In this regard, pH of the enzyme treatment solution 3D was 8.1.

### (Enzyme treatment solution 3E)

An enzyme treatment solution 3E was prepared in the same manner as the enzyme treatment solution 3A except that salt was further added to the enzyme treatment solution 3A so that a salimeter measurement value of an enzyme treatment solution to be obtained would become 1.7%. In this regard, pH of the enzyme treatment solution 3E was 8.1.

### (Enzyme treatment solution 3F)

An enzyme treatment solution 3F was prepared in the same manner as the enzyme treatment solution 3A except that salt was further added to the enzyme treatment solution 3A so that a salimeter measurement value of an enzyme treatment solution to be obtained would become 2.0%. In this regard, pH of the enzyme treatment solution 3F was 8.1.

### (Enzyme treatment solution 3G)

An enzyme treatment solution 3G was prepared in the same manner as the enzyme treatment solution 3A except that salt was further added to the enzyme treatment solution 3A so that a salimeter measurement value of an enzyme treatment solution to be obtained would become 2.3%. In this regard, pH of the enzyme treatment solution 3G was 8.1.

### (Enzyme treatment solution 3H)

An enzyme treatment solution 3H was prepared in the same manner as the enzyme treatment solution 3A except that salt was further added to the enzyme treatment solution 3A so that a salimeter measurement value of an enzyme treatment solution to be obtained would become 2.6%. In this regard, pH of the enzyme treatment solution 3H was 8.1.

### (Enzyme treatment solution 3I)

An enzyme treatment solution 3I was prepared in the same manner as the enzyme treatment solution 3A except that salt was further added to the enzyme treatment solution 3A so that a salimeter measurement value of an enzyme treatment solution to be obtained would become 2.9%. In this regard, pH of the enzyme treatment solution 3I was 8.1.

### (Enzyme treatment solution 3J)

An enzyme treatment solution 3J was prepared in the same manner as the enzyme treatment solution 3A except that salt was further added to the enzyme treatment solution 3A so that a salimeter measurement value of an enzyme treatment solution to be obtained would become 3.2%. In this regard, pH of the enzyme treatment solution 3J was 8.1.

### 3-2. Production of softened animal-based food material

In each of the following Examples and Comparative Examples, a softened animal-based food material was produced using an enzyme treatment solution having a different salimeter measurement value.

### (Comparative Example 3A, Examples 3B to 3I, Comparative Example 3J)

A softened animal-based food material (chicken breast) of each of Comparative Example 3A, Examples 3B to 3I and Comparative Example 3J in a frozen state was produced in the same manner as Comparative Example 1A except that each of the enzyme treatment solutions 3A to 3J was used instead of the enzyme treatment solution 1A as the enzyme treatment solution to be used in the enzyme treatment step <1>.

### 3-3. Evaluation

The softened animal-based food materials of the chicken breast in the frozen state produced in each of Examples and Comparative Examples were defrosted by being heated using the steam convection oven ("Self Cooking Center 61 type" produced by RATIONAL) under the conditions in which relative humidity was 100%RH, a temperature inside was 70°C and a heat time was 30 minutes. The softened animal-based food materials, which were defrosted, were evaluated on the above items 1-3-1 to 1-3-4 in the same manner as Comparative Examples 1A to 1D and Example 1E.

As a result, the softened animal-based food materials, which were defrosted, of the chicken breast produced in each of Examples and Comparative Examples are softened so as to have hardnesses of 1×10⁵ N/m² or less, respectively, in the evaluation of hardness described in the item 1-3-1.

Further, when in the evaluations of mouthfeel, flavor and ease of swallow described in the items 1-3-2 to 1-3-4, a case that all obtained average values are 4 or more is defined as "A", a case that all obtained average values are 3 or more is defined as "B", a case that at least one of obtained average values is less than 3 is defined as "C" and a case that two or more obtained average values are less than 3 is defined as "D", performed are comprehensive evaluations of the softened animal-based food materials, which were defrosted, of the chicken breast produced in each of Examples and Comparative Examples.

These results of the comprehensive evaluations are shown in Table 3.

[Table 3]

**Table 3**

| | Animal material | Enzyme treatment solution | | | Sensory evaluation | | | |
|---|---|---|---|---|---|---|---|---|
| | | Salimeter measurement value [%] | pH | Proteolytic enzyme | Mouth-feel | Flavor | Ease of swallow | Comprehensive evaluation |
| Comp. Ex. 3A | Chicken breast | 0.50 | 8.1 | Bromelain | 2.7 | 2.7 | 1.4 | D |
| Ex. 3B | Chicken breast | 0.70 | 8.1 | Bromelain | 3.0 | 3.0 | 3.0 | B |
| Ex. 3C | Chicken breast | 1.00 | 8.1 | Bromelain | 3.1 | 3.0 | 3.0 | B |
| Ex. 3D | Chicken breast | 1.30 | 8.1 | Bromelain | 3.2 | 3.0 | 3.1 | B |
| Ex. 3E | Chicken breast | 1.70 | 8.1 | Bromelain | 3.6 | 3.5 | 3.2 | B |
| Ex. 3F | Chicken breast | 2.00 | 8.1 | Bromelain | 3.6 | 3.3 | 3.3 | B |
| Ex. 3G | Chicken breast | 2.30 | 8.1 | Bromelain | 4.1 | 3.3 | 3.3 | B |
| Ex. 3H | Chicken breast | 2.60 | 8.1 | Bromelain | 4.2 | 3.0 | 3.0 | B |
| Ex. 3I | Chicken breast | 2.90 | 8.1 | Bromelain | 4.1 | 3.0 | 3.0 | B |
| Comp. Ex. 3J | Chicken breast | 3.20 | 8.1 | Bromelain | 4.0 | 1.4 | 3.0 | C |

As shown in Table 3, all the comprehensive evaluations of the softened animal-based food materials of the chicken breast produced in each of Examples using the enzyme treatment solution whose salimeter measurement value is set to a value falling within a range of 0.7% or more but less than 3.0% are "B". These results mean that the chicken breast can be softened, while maintaining mouthfeel and flavor thereof.

On the other hand, all the comprehensive evaluations of the softened animal-based food materials of the chicken breast produced in each of Comparative Examples using the enzyme treatment solution whose salimeter measurement value is set to a value falling within a range of less than 0.7% or 3.0 or more are "C" or "D". These results mean that the chicken breast cannot be softened or maintain mouthfeel and flavor thereof.

For the above facts, by using the enzyme treatment solution whose pH is set to the value falling within the range of 8.0 or higher but lower than 10.5 and whose salimeter measurement value is set to the value falling within the range of 0.7% or more but less than 3.0%, it is obvious that a softened animal-based food material in which mouthfeel and flavor are maintained can be produced.

### 4. Examination of kind of enzyme contained in enzyme treatment solution

### 4-1. Preparation of enzyme treatment solution

### (Enzyme treatment solution 4A)

A proteinase of *Aspergillus* origin was prepared as a proteolytic enzyme, salt, sugar and High Cook Chicken (produced by Kyowa Hakko Food Specialties Co., Ltd.) were prepared as a seasoning, disodium hydrogen phosphate and glycine were prepared as a pH adjuster. The proteinase was dissolved into a deionized water so that an amount thereof would become 0.5 wt%. Thereafter, the salt, the sugar and the High Cook Chicken were added thereto so that a salimeter measurement value of an enzyme treatment solution to be obtained would become 1.3% or more, and the disodium hydrogen phosphate and the glycine were added thereto so that pH of the enzyme treatment solution to be obtained would become near 8.5. In this way, an enzyme treatment solution 4A was prepared. In this regard, pH of the enzyme treatment solution 4A was 8.5 and a salimeter measurement value thereof was 1.3%.

### (Enzyme treatment solution 4B)

An enzyme treatment solution 4B was prepared in the same manner as the enzyme treatment solution 4A except that a proteinase of *Bacillus* origin was prepared as the proteolytic enzyme, and an amount thereof was adjusted to 0.3 wt%. In this regard, pH of the enzyme treatment solution 4B was 8.5 and a salimeter measurement value thereof was 1.3%.

### (Enzyme treatment solution 4C)

An enzyme treatment solution 4C was prepared in the same manner as the enzyme treatment solution 4A except that papain was prepared as the proteolytic enzyme, and an amount thereof was adjusted to 0.3 wt%. In this regard, pH of the enzyme treatment solution 4C was 8.5 and a salimeter measurement value thereof was 1.3%.

### (Enzyme treatment solution 4D)

An enzyme treatment solution 4D was prepared in the same manner as the enzyme treatment solution 4A except that trypsin of bovine origin was prepared as the proteolytic enzyme, and an amount thereof was adjusted to 0.3 wt%. In this regard, pH of the enzyme treatment solution 4D was 8.5 and a salimeter measurement value thereof was 1.3%.

### 4-2. Production of softened animal-based food material

In each of the following Examples, a softened animal-based food material was produced using an enzyme treatment solution containing a different proteolytic enzyme in the kind thereof.

### (Example 4A-chicken, Example 4B-chicken, Example 4C-chicken, Example 4D-chicken)

A softened animal-based food material (chicken breast) of each of Example 4A-chicken, Example 4B-chicken, Example 4C-chicken and Example 4D-chicken in a frozen state was produced in the same manner as Comparative Example 1A except that each of the enzyme treatment solutions 4A to 4D was used instead of the enzyme treatment solution 1A as the enzyme treatment solution to be used in the enzyme treatment step <1>.

### (Example 4A-pork, Example 4B-pork, Example 4C-pork, Example 4D-pork)

A softened animal-based food material (pork leg) of each of Example 4A-pork, Example 4B-pork, Example 4C-pork and Example 4D-pork in a frozen state was produced in the same manner as Comparative Example 1A except that a pork leg trimming off fat was prepared instead of the chicken breast as the animal-based food material to be softened, and each of the enzyme treatment solutions 4A to 4D was used instead of the enzyme treatment solution 1A as the enzyme treatment solution to be used in the enzyme treatment step <1>.

### (Example 4A-beef, Example 4B-beef, Example 4C-beef, Example 4D-beef)

A softened animal-based food material (beef leg) of each of Example 4A-beef, Example 4B-beef, Example 4C-beef and Example 4D-beef in a frozen state was produced in the same manner as Comparative Example 1A except that a beef leg trimming off fat was prepared instead of the chicken breast as the animal-based food material to be softened, and each of the enzyme treatment solutions 4A to 4D was used instead of the enzyme treatment solution 1A as the enzyme treatment solution to be used in the enzyme treatment step <1>.

### (Example 4A-mackerel, Example 4B-mackerel, Example 4C-mackerel, Example 4D-mackerel)

A softened animal-based food material (mackerel) of each of Example 4A-mackerel, Example 4B-mackerel, Example 4C-mackerel and Example 4D-mackerel in a frozen state was produced in the same manner as Comparative Example 1A except that a mackerel fillet was prepared instead of the chicken breast as the animal-based food material to be softened, and each of the enzyme treatment solutions 4A to 4D was used instead of the enzyme treatment solution 1A as the enzyme treatment solution to be used in the enzyme treatment step <1>.

### (Example 4A-scallop, Example 4B-scallop, Example 4C-scallop, Example 4D-scallop)

A softened animal-based food material (scallop adductor muscle) of each of Example 4A-scallop, Example 4B-scallop, Example 4C-scallop and Example 4D-scallop in a frozen state was produced in the same manner as Comparative Example 1A except that a scallop adductor muscle was prepared instead of the chicken breast as the animal-based food material to be softened, and each of the enzyme treatment solutions 4A to 4D was used instead of the enzyme treatment solution 1A as the enzyme treatment solution to be used in the enzyme treatment step <1>.

### 4-3. Evaluation

The softened animal-based food materials of the chicken breast, the pork leg, the beef leg, the mackerel and the scallop adductor muscle in the frozen state produced in each of Examples were defrosted by being heated using the steam convection oven ("Self Cooking Center 61 type" produced by RATIONAL) under the conditions in which relative humidity was 100%RH, a temperature inside was 70°C and a heat time was 30 minutes. The softened animal-based food materials, which were defrosted, were evaluated on the above items 1-3-1 to 1-3-4 in the same manner as Comparative Examples 1A to 1D and Example 1E.

As a result, the softened animal-based food materials, which were defrosted, of the chicken breast, the pork leg, the beef leg, the mackerel and the scallop adductor muscle produced in each of Examples are softened so as to have hardnesses of 1×10⁵ N/m² or less, respectively, in the evaluation of hardness described in the item 1-3-1.

Further, when in the evaluations of mouthfeel, flavor and ease of swallow described in the items 1-3-2 to 1-3-4, a case that all obtained average values are 4 or more is defined as "A", a case that all obtained average values are 3 or more is defined as "B", a case that at least one of obtained average values is less than 3 is defined as "C" and a case that two or more obtained average values are less than 3 is defined as "D", performed are comprehensive evaluations of the softened animal-based food materials, which were defrosted, of the chicken breast, the pork leg, the beef leg, the mackerel and the scallop adductor muscle produced in each of Examples.

These results of the comprehensive evaluations are shown in Table 4.

[Table 4]

**Table 4**

| Animal material | Origin of enzyme | | | | | | | |
|---|---|---|---|---|---|---|---|---|
| | Aspergillus | | Bacillus | | Papain (Carica papaya L. origin) | | Trypsin (Bovine origin) | |
| Chicken breast | Ex. 4A-chicken | B | Ex. 4B-chicken | B | Ex. 4C-chicken | A | Ex. 4D-chicken | B |
| Pork leg | Ex. 4A-pork | C | Ex. 4B-pork | C | Ex. 4C-pork | C | Ex. 4D-pork | C |
| Beef leg | Ex. 4A-beef | C | Ex. 4B-beef | C | Ex. 4C-beef | C | Ex. 4D-beef | C |
| Mackerel | Ex. 4A-mackerel | B | Ex. 4B-mackerel | B | Ex. 4C-mackerel | A | Ex. 4D-mackerel | B |
| Scallop Adductor muscle | Ex. 4A-scallop | B | Ex. 4B-scallop | B | Ex. 4C-scallop | A | Ex. 4D-scallop | B |

As shown in Table 4, all the comprehensive evaluations of the softened animal-based food materials of the chicken breast, the mackerel and the scallop adductor muscle produced in each of Examples are "B" or "A" regardless of the kind of the enzyme. These results mean that the above animal-based food materials can be softened, while maintaining mouthfeel and flavor thereof.

### 5. Examination of addition of xanthan gum to enzyme treatment solution

### 5-1. Preparation of enzyme treatment solution

### (Enzyme treatment solution 5A)

A proteinase of *Bacillus* origin was prepared as a proteolytic enzyme, salt and a yeast extract ("AROMILD" produced by KOHJIN Co., Ltd.) were prepared as a seasoning, disodium hydrogen phosphate and glycine were prepared as a pH adjuster. The proteinase was dissolved into a deionized water so that an amount thereof would become 0.05 wt%. Thereafter, the salt and the yeast extract were added thereto so that a salimeter measurement value of an enzyme treatment solution to be obtained would become 1.3% or more, and the disodium hydrogen phosphate and the glycine were added thereto so that pH of the enzyme treatment solution to be obtained would become near 8.5. In this way, an enzyme treatment solution 5A was prepared. In this regard, pH of the enzyme treatment solution 5A was 8.4 and a salimeter measurement value thereof was 1.5%.

### (Enzyme treatment solution 5B)

An enzyme treatment solution 5B was prepared in the same manner as the enzyme treatment solution 5A except that xanthan gum was prepared as a thickening agent, and then added to the enzyme treatment solution 5A so that an amount thereof would become 0.01 wt%. In this regard, pH and a salimeter measurement value of the enzyme treatment solution 5B were equal to the pH and the salimeter measurement value of the enzyme treatment solution 5A, respectively.

### (Enzyme treatment solution 5C)

An enzyme treatment solution 5C was prepared in the same manner as the enzyme treatment solution 5A except that xanthan gum was prepared as a thickening agent, and then added to the enzyme treatment solution 5A so that an amount thereof would become 0.10 wt%. In this regard, pH and salimeter measurement value of the enzyme treatment solution 5C were equal to the pH and the salimeter measurement value of the enzyme treatment solution 5A, respectively.

### (Enzyme treatment solution 5D)

An enzyme treatment solution 5D was prepared in the same manner as the enzyme treatment solution 5A except that xanthan gum was prepared as a thickening agent, and then added to the enzyme treatment solution 5A so that an amount thereof would become 1.00 wt%. In this regard, pH and salimeter measurement value of the enzyme treatment solution 5D were equal to the pH and the salimeter measurement value of the enzyme treatment solution 5A, respectively.

### 5-2. Production of softened animal-based food material

In each of the following Examples, a softened animal-based food material was produced using an enzyme treatment solution having a different amount of xanthan gum contained therein.

### (Example 5A-chicken, Example 5B-chicken, Example 5C-chicken, Example 5D-chicken)

A softened animal-based food material (chicken breast) of each of Example 5A-chicken, Example 5B-chicken, Example 5C-chicken and Example 5D-chicken in a frozen state was produced in the same manner as Comparative Example 1A except that each of the enzyme treatment solutions 5A to 5D was used instead of the enzyme treatment solution 1A as the enzyme treatment solution to be used in the enzyme treatment step <1>.

### (Example 5A-pork, Example 5B-pork, Example 5C-pork, Example 5D-pork)

A softened animal-based food material (pork leg) of each of Example 5A-pork, Example 5B-pork, Example 5C-pork and Example 5D-pork in a frozen state was produced in the same manner as Comparative Example 1A except that a pork leg trimming off fat was prepared instead of the chicken breast as the animal-based food material to be softened, and each of the enzyme treatment solutions 5A to 5D was used instead of the enzyme treatment solution 1A as the enzyme treatment solution to be used in the enzyme treatment step <1>.

### (Example 5A-beef, Example 5B-beef, Example 5C-beef, Example 5D-beef)

A softened animal-based food material (beef leg) of each of Example 5A-beef, Example 5B-beef, Example 5C-beef and Example 5D-beef in a frozen state was produced in the same manner as Comparative Example 1A except that a beef leg trimming off fat was prepared instead of the chicken breast as the animal-based food material to be softened, and each of the enzyme treatment solutions 5A to 5D was used instead of the enzyme treatment solution 1A as the enzyme treatment solution to be used in the enzyme treatment step <1>.

### (Example 5A-mackerel, Example 5B-mackerel, Example 5C-mackerel, Example 5D-mackerel)

A softened animal-based food material (mackerel) of each of Example 5A-mackerel, Example 5B-mackerel, Example 5C-mackerel and Example 5D-mackerel in a frozen state was produced in the same manner as Comparative Example 1A except that a mackerel fillet was prepared instead of the chicken breast as the animal-based food material to be softened, and each of the enzyme treatment solutions 5A to 5D was used instead of the enzyme treatment solution 1A as the enzyme treatment solution to be used in the enzyme treatment step <1>.

### (Example 5A-scallop, Example 5B-scallop, Example 5C-scallop, Example 5D-scallop)

A softened animal-based food material (scallop adductor muscle) of each of Example 5A-scallop, Example 5B-scallop, Example 5C-scallop and Example 5D-scallop in a frozen state was produced in the same manner as Comparative Example 1A except that a scallop adductor muscle was prepared instead of the chicken breast as the animal-based food material to be softened, and each of the enzyme treatment solutions 5A to 5D was used instead of the enzyme treatment solution 1A as the enzyme treatment solution to be used in the enzyme treatment step <1>.

### 5-3. Evaluation

The softened animal-based food materials of the chicken breast, the pork leg, the beef leg, the mackerel and the scallop adductor muscle in the frozen state produced in each of Examples were defrosted by being heated using the steam convection oven ("Self Cooking Center 61 type" produced by RATIONAL) under the conditions in which relative humidity was 100%RH, a temperature inside was 70°C and a heat time was 30 minutes. The softened animal-based food materials, which were defrosted, were evaluated on the above items 1-3-1 to 1-3-4 in the same manner as Comparative Examples 1A to 1D and Example 1E.

As a result, the softened animal-based food materials, which were defrosted, of the chicken breast, the pork leg, the beef leg, the mackerel and the scallop adductor muscle produced in each of Examples are softened so as to have hardnesses of 1×10⁵ N/m² or less, respectively, in the evaluation of hardness described in the item 1-3-1.

Further, when in the evaluations of mouthfeel, flavor and ease of swallow described in the items 1-3-2 to 1-3-4, a case that all obtained average values are 4 or more is defined as "A", a case that all obtained average values are 3 or more is defined as "B", a case that at least one of obtained average values is less than 3 is defined as "C" and a case that two or more obtained average values are less than 3 is defined as "D", performed are comprehensive evaluations of the softened animal-based food materials, which were defrosted, of the chicken breast, the pork leg, the beef leg, the mackerel and the scallop adductor muscle produced in each of Examples.

These results of the comprehensive evaluations are shown in Table 5.

[Table 5]

**Table 5**

| Animal material | Evaluation of effect of xanthan gum concentration to each animal-based food material | | | | | | | |
|---|---|---|---|---|---|---|---|---|
| | 0% (containing no xanthan gum) | | 0.01% | | 0.10% | | 1.00% | |
| Chicken breast | Ex. 5A-chicken | B | Ex. 5B-chicken | A | Ex. 5C-chicken | A | Ex. 5D-chicken | A |
| Pork leg | Ex. 5A-pork | C | Ex. 5B-pork | B | Ex. 5C-pork | A | Ex. 5D-pork | A |
| Beef leg | Ex. 5A-beef | C | Ex. 5B-beef | B | Ex. 5C-beef | A | Ex. 5D-beef | A |
| Mackerel | Ex. 5A-mackerel | B | Ex. 5B-mackerel | A | Ex. 5C-mackerel | A | Ex. 5D-mackerel | A |
| Scallop adductor muscle | Ex. 5A-scallop | B | Ex. 5B-scallop | A | Ex. 5C-scallop | A | Ex. 5D-scallop | A |

As shown in Table 5, all the comprehensive evaluations of the softened animal-based food materials of the chicken breast, the mackerel and the scallop adductor muscle produced in Examples 5A using the enzyme treatment solution containing no xanthan gum are "B". These results mean that the above animal-based food materials can be softened, while maintaining mouthfeel and flavor thereof. However, the comprehensive evaluations of the softened animal-based food materials of the pork leg and the beef leg are "C". These results mean that the above animal-based food materials cannot be softened or maintain mouthfeel and flavor thereof.

On the other hand, the comprehensive evaluations of the softened animal-based food materials of the chicken breast, the pork leg, the beef leg, the mackerel and the scallop adductor muscle produced in each of Examples 5B to 5D using the enzyme treatment solution containing the xanthan gum are "B" or "A" regardless of the kind of the animal-based food material. These results mean that the above animal-based food materials can be softened, while maintaining mouthfeel and flavor thereof.

### 6. Examination of kind of thickening agent added to enzyme treatment solution

### 6-1. Preparation of enzyme treatment solution

### (Enzyme treatment solution 6B)

An enzyme treatment solution 6B was prepared in the same manner as the enzyme treatment solution 4A except that xanthan gum was prepared as a thickening agent, and then added to the enzyme treatment solution 4A so that an amount thereof would become 0.2 wt%. In this regard, pH and a salimeter measurement value of the enzyme treatment solution 6B were equal to the pH and the salimeter measurement value of the enzyme treatment solution 4A.

### (Enzyme treatment solution 6C)

An enzyme treatment solution 6C was prepared in the same manner as the enzyme treatment solution 4A except that carrageenan was prepared as a thickening agent, and then added to the enzyme treatment solution 4A so that an amount thereof would become 0.2 wt%. In this regard, pH and a salimeter measurement value of the enzyme treatment solution 6B were equal to the pH and the salimeter measurement value of the enzyme treatment solution 4A.

### (Enzyme treatment solution 6D)

An enzyme treatment solution 6D was prepared in the same manner as the enzyme treatment solution 4A except that Locust bean gum was prepared as a thickening agent, and then added to the enzyme treatment solution 4A so that an amount thereof would become 0.2 wt%. In this regard, pH and a salimeter measurement value of the enzyme treatment solution 6D were equal to the pH and the salimeter measurement value of the enzyme treatment solution 4A.

### 6-2. Production of softened animal-based food material

In each of the following Examples, a softened animal-based food material was produced using an enzyme treatment solution containing a different thickening agent in the kind thereof.

### (Example 6B-chicken, Example 6C-chicken, Example 6D-chicken)

A softened animal-based food material (chicken breast) of each of Example 6B-chicken, Example 6C-chicken and Example 6D-chicken in a frozen state was produced in the same manner as Comparative Example 1A except that each of the enzyme treatment solutions 6B to 6D was used instead of the enzyme treatment solution 1A as the enzyme treatment solution to be used in the enzyme treatment step <1>.

### (Example 6B-pork, Example 6C-pork, Example 6D-pork)

A softened animal-based food material (pork leg) of each of Example 6B-pork, Example 6C-pork and Example 6D-pork in a frozen state was produced in the same manner as Comparative Example 1A except that a pork leg trimming off fat was prepared instead of the chicken breast as the animal-based food material to be softened, and each of the enzyme treatment solutions 6B to 6D was used instead of the enzyme treatment solution 1A as the enzyme treatment solution to be used in the enzyme treatment step <1>.

### (Example 6B-beef, Example 6C-beef, Example 6D-beef)

A softened animal-based food material (beef leg) of each of Example 6B-beef, Example 6C-beef and Example 6D-beef in a frozen state was produced in the same manner as Comparative Example 1A except that a beef leg trimming off fat was prepared instead of the chicken breast as the animal-based food material to be softened, and each of the enzyme treatment solutions 6B to 6D was used instead of the enzyme treatment solution 1A as the enzyme treatment solution to be used in the enzyme treatment step <1>.

### (Example 6B-mackerel, Example 6C-mackerel, Example 6D-mackerel)

A softened animal-based food material (mackerel) of each of Example 6B-mackerel, Example 6C-mackerel and Example 6D-mackerel in a frozen state was produced in the same manner as Comparative Example 1A except that a mackerel fillet was prepared instead of the chicken breast as the animal-based food material to be softened, and each of the enzyme treatment solutions 6B to 6D was used instead of the enzyme treatment solution 1A as the enzyme treatment solution to be used in the enzyme treatment step <1>.

### (Example 6B-scallop, Example 6C-scallop, Example 6D-scallop)

A softened animal-based food material (scallop adductor muscle) of each of Example 6B-scallop, Example 6C-scallop and Example 6D-scallop in a frozen state was produced in the same manner as Comparative Example 1A except that a scallop adductor muscle was prepared instead of the chicken breast as the animal-based food material to be softened, and each of the enzyme treatment solutions 6B to 6D was used instead of the enzyme treatment solution 1A as the enzyme treatment solution to be used in the enzyme treatment step <1>.

### 6-3. Evaluation

The softened animal-based food materials of the chicken breast, the pork leg, the beef leg, the mackerel and the scallop adductor muscle in the frozen state produced in each of Examples were defrosted by being heated using the steam convection oven ("Self Cooking Center 61 type" produced by RATIONAL) under the conditions in which relative humidity was 100%RH, a temperature inside was 70°C and a heat time was 30 minutes. The softened animal-based food materials, which were defrosted, were evaluated on the above items 1-3-1 to 1-3-4 in the same manner as Comparative Examples 1A to 1D and Example 1E.

As a result, the softened animal-based food materials, which were defrosted, of the chicken breast, the pork leg, the beef leg, the mackerel and the scallop adductor muscle produced in each of Examples are softened so as to have hardnesses of 1×10⁵ N/m² or less, respectively, in the evaluation of hardness described in the item 1-3-1.

Further, when in the evaluations of mouthfeel, flavor and ease of swallow described in the items 1-3-2 to 1-3-4, a case that all obtained average values are 4 or more is defined as "A", a case that all obtained average values are 3 or more is defined as "B", a case that at least one of obtained average values is less than 3 is defined as "C" and a case that two or more obtained average values are less than 3 is defined as "D", performed are comprehensive evaluations of the softened animal-based food materials, which were defrosted, of the chicken breast, the pork leg, the beef leg, the mackerel and the scallop adductor muscle produced in each of Examples.

These results of the comprehensive evaluations are shown in Table 6.

In this regard, the results of the comprehensive evaluations of the softened animal-based food materials produced in Example using the enzyme treatment solution 4A containing no thickening agent are also shown in Table 6 for reference.

[Table 6]

**Table 6**

| Animal material | Evaluation of effect of thickening agent to each animal-based food material | | | | | | | |
|---|---|---|---|---|---|---|---|---|
| | 0% (containing no thic kening agent) | | 0.2% xanthan gum | | 0.2% carrageenan | | 0.2% Locust bean gum | |
| Chicken breast | Ex. 4A-chicken | B | Ex. 6B-chicken | A | Ex. 6C-chicken | A | Ex. 6D-chicken | A |
| Pork leg | Ex. 4A-pork | C | Ex. 6B-pork | B | Ex. 6C-pork | B | Ex. 6D-pork | B |
| Beef leg | Ex. 4A-beef | C | Ex. 6B-beef | B | Ex. 6C-beef | B | Ex. 6D-beef | B |
| Mackerel | Ex. 4A-mackerel | B | Ex. 6B-mackerel | A | Ex. 6C-mackerel | A | Ex. 6D-mackerel | A |
| Scallop Adductor muscle | Ex. 4A-scallop | B | Ex. 6B-scallop | A | Ex. 6C-scallop | A | Ex. 6D-scallop | A |

As shown in Table 6, the comprehensive evaluations of the softened animal-based food materials of the chicken breast, the mackerel and the scallop adductor muscle produced in Example 4A using the enzyme treatment solution containing no thickening agent are "B". These results mean that the above animal-based food materials can be softened, while maintaining mouthfeel and flavor thereof. However, the comprehensive evaluations of the softened animal-based food materials of the pork leg and the beef leg are "C". These results mean that the above animal-based food materials cannot be softened or maintain mouthfeel and flavor thereof.

On the other hand, the comprehensive evaluations of the softened animal-based food materials of the chicken breast, the pork leg, the beef leg, the mackerel and the scallop adductor muscle produced in each of Examples 6B to 6D using the enzyme treatment solution containing the thickening agent are "B" or "A" regardless of the kind of the thickening agent. These results mean that the above animal-based food materials can be softened, while maintaining mouthfeel and flavor thereof.

### 7. Examination of storage treatment

### 7-1. Preparation of enzyme treatment solution

Prepared was the enzyme treatment solution 2C obtained in the "2. Examination of enzyme treatment solution" as an enzyme treatment solution.

### 7-2. Production of softened animal-based food material

In each of the following Examples, a softened animal-based food material was produced using the enzyme treatment solution 2C.

### (Example 2C-chicken, Example 2C-pork, Example 2C-beef, Example 2C-mackerel, Example 2C-scallop)

Softened animal-based food materials of Example 2C-chicken, Example 2C-pork, Example 2C-beef, Example 2C-mackerel and Example 2C-scallop in a frozen state were produced in the same manner as Comparative Example 1A except that various kinds of animal-based food materials were prepared as the animal-based food material to be softened, and the enzyme treatment solution 2C was used instead of the enzyme treatment solution 1A as the enzyme treatment solution to be used in the enzyme treatment step <1>.

### (Example 7-chicken, Example 7-pork, Example 7-beef, Example 7-mackerel, Example 7-scallop)

Softened animal-based food material of Example 7-chicken, Example 7-pork, Example 7-beef, Example 7-mackerel and Example 7-scallop in a frozen state were produced in the same manner as Comparative Example 1A except that various kinds of animal-based food materials were prepared as the animal-based food material to be softened, the enzyme treatment solution 2C was used instead of the enzyme treatment solution 1A as the enzyme treatment solution to be used in the enzyme treatment step <1>, and the following storage treatment step <3'> was carried out instead of the storage treatment step <3>.

### <3'> Storage treatment step

The various kinds of softened animal-based food materials were quickly frozen using a quick freezing machine ("Blast Freezer QXF-00655" produced by FUKUSHIMA INDUSTRIES CORP.), so that a central temperature thereof would become down to -35°C, and then freeze dried using a freeze dryer ("EYELA freeze dryer FDU-1100 type" produced by TOKYO RIKAKIKAI CO., LTD.) at a shelf temperature of 20°C for 3 days.

### 7-3. Evaluation

The softened animal-based food materials of the chicken breast, the pork leg, the beef leg, the mackerel and the scallop adductor muscle in the frozen state produced in Example 2C were defrosted by being heated using the steam convection oven ("SelfCooking Center 61 type" produced by RATIONAL) under the conditions in which relative humidity was 100%RH, a temperature inside was 70°C and a heat time was 30 minutes. The softened animal-based food materials, which were defrosted, were evaluated on the above items 1-3-1 to 1-3-4 in the same manner as Comparative Examples 1A to 1D and Example 1E.

As a result, the softened animal-based food materials, which were defrosted, of the chicken breast, the pork leg, the beef leg, the mackerel and the scallop adductor muscle produced in Example 2C are softened so as to have hardnesses of 1×10⁵ N/m² or less, respectively, in the evaluation of hardness described in the item 1-3-1.

Further, when in the evaluations of mouthfeel, flavor and ease of swallow described in the items 1-3-2 to 1-3-4, a case that all obtained average values are 4 or more is defined as "A", a case that all obtained average values are 3 or more is defined as "B", a case that at least one of obtained average values is less than 3 is defined as "C" and a case that two or more obtained average values are less than 3 is defined as "D", performed are comprehensive evaluations of the softened animal-based food materials, which were defrosted, of the chicken breast, the pork leg, the beef leg, the mackerel and the scallop adductor muscle produced in Example 2C.

Next, the softened animal-based food materials, which were freeze dried, of the chicken breast, the pork leg, the beef leg, the mackerel and the scallop adductor muscle produced in each of Examples 7 were restored by dropping water or boiling water of more than an amount lost due to dry thereonto, and then evaluated on the above items 1-3-1 to 1-3-4 in the same manner as Comparative Examples 1A to 1D and Example 1E.

In this regard, in order to restore the softened animal-based food materials, water, boiling water, a boiling water (50%(w/w) aqueous solution) containing "Visipaque 320" (produced by Daiichi Sankyo Company, Limited) as a contrast medium, a boiling water (30%(w/v) suspension) containing "Barytgen" (produced by FUSHIMI pharmaceutical Co., Ltd.) and a boiling water containing a seasoning (that is, an aqueous solution containng 2.5% of cooking sake, 2.5% of sweet sake, 1.1% of sugar and 1.6% of soy sauce) were used.
The softened animal-based food materials, which were restored using the above liquids, are defined as Example 7A-(chicken, pork, beef, mackerel, scallop), Example 7B-( chicken, pork, beef, mackerel, scallop), Example 7C-( chicken, pork, beef, mackerel, scallop), Example 7D-( chicken, pork, beef, mackerel, scallop) and Example 7E-( chicken, pork, beef, mackerel, scallop), respectively.

As a result, the softened animal-based food materials of the chicken breast, the pork leg, the beef leg, the mackerel and the scallop adductor muscle restored in each of Examples 7A to 7E are softened so as to have hardnesses of 1×10⁵ N/m² or less, respectively, regardless of whether the contrast medium is contained, in the evaluation of hardness described in the item 1-3-1,.

Further, when in the evaluations of mouthfeel, flavor and ease of swallow described in the items 1-3-2 to 1-3-4, a case that all obtained average values are 4 or more is defined as "A", a case that all obtained average values are 3 or more is defined as "B", a case that at least one of obtained average values is less than 3 is defined as "C" and a case that two or more obtained average values are less than 3 is defined as "D", performed are comprehensive evaluations of the softened animal-based food materials of the chicken breast, the pork leg, the beef leg, the mackerel and the scallop adductor muscle restored in each of Examples 7A to 7E.

These results of the comprehensive evaluations are shown in Table 7.

[Table 7]

**Table 7**

| Animal material | Evaluation of each animal-based food material freeze dried, and then restored | | | | | | | | | | | |
|---|---|---|---|---|---|---|---|---|---|---|---|---|
| | No freeze drying treatment | | Freeze dried, and then soaked with water | | Freeze dried, and then soaked with boiling water | | Freeze dried, and then soaked with boiling water containing 50%(w/w) of Visipaque 320 | | Freeze dried, and then soaked with boiling water containing 30%(w/v) of Barytgen | | Freeze dried, and then soaked with boiling water containing seasoning | |
| Chicken breast | Ex . 2C-chicken | A | Ex. 7A-chicken | A | Ex. 7B-chicken | A | Ex. 7B-chicken | A | Ex. 7D-chicken | A | Ex. 7E-chicken | A |
| Pork leg | Ex. 2C-pork | B | Ex. 7A-pork | B | Ex. 7B-pork | B | Ex. 7B-pork | B | Ex. 7D-pork | B | Ex. 7E-pork | B |
| Beef leg | Ex. 2C-beef | B | Ex. 7A-beef | B | Ex. 7B-beef | B | Ex. 7B-beef | B | Ex. 7D-beef | B | Ex. 7E-beef | B |
| Mackerel | Ex. 2C-mackerel | A | Ex. 7A-mackerel | A | Ex. 7B-mackerel | A | Ex. 7B-mackerel | B | Ex. 7D-mackerel | B | Ex. 7E-mackerel | B |
| Scallop Adductor muscle | Ex. 2C-scallop | A | Ex. 7A-scallop | A | Ex. 7B-scallop | A | Ex. 7B-scallop | A | Ex. 7D-scallop | A | Ex. 7E-scallop | A |

As shown in Table 7, all the comprehensive evaluations of the softened animal-based food materials of the chicken breast, the pork leg, the beef leg, the mackerel and the scallop adductor muscle produced in Examples 2C and Examples 7A to 7E are "B" or "A" regardless of the storage treatment method, that is, in the case of a freezing method or a freeze drying method. The above softened animal-based food materials can be restored, while maintaining mouthfeel and flavor thereof.

Further, the softened animal-based food materials restored in Examples 7C and 7D can be contrasted using a X-ray photography.

### INDUSTRIAL APPLICABILITY

According to the present invention, it is possible to reliably soften an animal-based food material, while maintaining mouthfeel and flavor thereof, to thereby obtain a softened animal-based food material having smooth mouthfeel.

Such a softened animal-based food material is suitable for being eaten by old persons or persons having difficulty in swallowing/chewing. Therefore, the present invention provides industrial applicability.

## Claims

1. An enzyme treatment solution adapted to be used in a softening method for softening an animal-based food material composed of meat or fish and shellfish by subjecting it to an enzyme treatment using the enzyme treatment solution,
wherein pH of the enzyme treatment solution is 8.0 or higher but lower than 10.5, and a salimeter measurement value obtained by measuring an electrolyte concentration of the enzyme treatment solution using a salimeter as a salt concentration is 0.7% or more but less than 3.0%.

2. The enzyme treatment solution as claimed in claim 1, wherein the enzyme treatment solution contains a proteolytic enzyme having an activity within an alkaline region.

3. The enzyme treatment solution as claimed in claim 2, wherein an amount of the proteolytic enzyme contained in the enzyme treatment solution is in the range of 5.0×10⁻⁴ to 3.0 wt%.

4. The enzyme treatment solution as claimed in any one of claims 1 to 3, wherein the enzyme treatment solution further contains a thickening agent.

5. The enzyme treatment solution as claimed in any one of claims 1 to 4, wherein the salimeter measurement value is obtained by measuring electrical conductivity of the enzyme treatment solution.

6. A softening method for softening an animal-based food material by subjecting it to an enzyme treatment using the enzyme treatment solution defined by any one of claims 1 to 5.

7. The softening method as claimed in claim 6, wherein the enzyme treatment is carried out by applying the enzyme treatment solution to the animal-based food material, and then reacting a proteolytic enzyme contained in the enzyme treatment solution and having an activity within an alkaline region with components of the animal-based food material.

8. The softening method as claimed in claim 6 or 7, wherein after the enzyme treatment, an enzyme deactivation treatment, in which the enzyme is deactivated by heating the animal-based food material, is carried out.

9. A softened animal-based food material obtained by softening an animal-based food material using the softening method defined by any one of claims 6 to 8.

10. The softened animal-based food material as claimed in claim 9, wherein in the case where the softened animal-based food material is subjected to a dry treatment, it can be restored using water or boiling water.

11. The softened animal-based food material as claimed in claim 10, wherein the water or the boiling water to be used for restoring the softened animal-based food material subjected to the dry treatment is an aqueous solution or an aqueous suspension containing at least one of a contrast medium and a food additive.

12. The softened animal-based food material as claimed in any one of claims 9 to 11, wherein compressive stress of the softened animal-based food material, which is measured according to a "test method for a food material suitable for patients with disturbance of swallowing" described in "Notice on a labeling approval of foods for special dietary uses and the like (Notice No. 0212001 of the Department of Food Safety, the Pharmaceutical and Food Safety Bureau of the Ministry of Health, Labour and Welfare of Japan, February 12, 2009", is 1×10⁵ N/m² or less.
